# EUROPEAN PATENT SPECIFICATION

(11) **EP 4 461 674 B1**
(45) Date of publication and mention of the grant of the patent: **03.09.2025**
(21) Application number: 24174291.5
(22) Date of filing: 06.05.2024
(51) Int. Cl.: B65G 17/46, A22C 17/02, B26D 7/06, B65G 17/08

(54) **POSITIONING MACHINE**
POSITIONIERMASCHINE
MACHINE DE POSITIONNEMENT

(30) Priority: 08.05.2023 BE 202305374
(43) Date of publication of application: 13.11.2024
(73) Proprietor: Marelec Food Technologies, 8620 Nieuwpoort (BE)
(72) Inventor: DEMUYNCK, Lieven, 8470 GISTEL (BE)
(74) Representative: Hostens, Veerle

(56) References cited:
- EP-A1- 0 631 950
- CA-A1- 2 135 847
- JP-B2- 3 896 090
- US-A1- 2009 250 324
- US-A1- 2021 179 359

## Description

The present invention relates to a positioning machine for cutting meat into desired portions, comprising a cutting blade and a feed conveyor belt for feeding the meat to the cutting blade in a conveying direction, wherein this feed conveyor belt is designed as a modular link belt, comprising:
- transverse pins which extend virtually parallel to each other transversely with respect to the conveying direction;
- links, each link comprising:
   ∘ a bearing surface, for placing the products thereon for conveyance of these products; and
   ∘ attachment bodies, for attaching a transverse pin therethrough, in order to incorporate the link in the link belt,
wherein said attachment bodies of links that are arranged adjacent to each other as seen in the conveying direction are arranged alternatingly on adjacent sides of these links and wherein a single transverse pin is fastened through these alternatingly arranged links.

Examples of positioning machines are described and depicted in EP2759205A1 and DE202006017089U1.

In a positioning machine, a product to be cut such as meat (this additionally also being understood to include poultry or fish) is fed on a conveyor belt, which may be designed as what is known as a link belt, towards a cutting blade, in order to cut this product into desired portions. After cutting, the portions are typically discharged from the positioning machine via an outfeed belt.

For the cutting of the product, it is very important that the product remains in a stable position in order to obtain accurate results.

To this end, use is typically made of a rapier which pierces the back of the product and pushes the product forwards towards the cutting blade when this product is being cut. In this case, this rapier is arranged above the conveyor belt and is movable in the conveying direction. The limitation of such a rapier is that the front of the product, in the zone where cutting is being performed, can still move sideways.

In addition, it is known to use an upper guide belt which presses on the product shortly before the cutting blade, as for example described and depicted in DE202006017089U1.

US8074791B1 describes a link belt intended for the food industry, wherein links are provided with holes through which a hook can be moved back and forth in order to hold a product. However, this solution can be used only with difficulty in a said portioning machine, since a product cannot be held with such a hook shortly before the cutting blade. In order to be able to allow the link belt to turn at the cutting blade, this hook would have to be lowered before the cutting blade is reached. Due to the parts that are movable back and forth, it also remains difficult to clean such a link belt in a food-safe manner.

US7494006B2 describes a link belt intended for the food industry and provided with releasably fastenable accessories. None of the described and depicted accessories would be suitable for sufficiently stably holding a product during the cutting thereof by means of a cutting blade in a portioning machine. However, such releasably fastenable accessories produce difficult-to-reach places in the conveyor belt for cleaning the latter in a food-safe manner.

In US5469956A, upright plates are fastened to the transverse pins and push the product forwards. However, in this case the product has to be positioned precisely against these plates in order to be able to be pushed forwards by them. The position of the product, as seen in the conveying direction, is therefore fixed. This is not suitable for all dimensions and shapes of products. When the link belt is advanced upwards, the product slides backwards against the plates, hindering detection of the product by means of detection systems in order to be able to cut the product into desired portions. Just like in the case of a rapier which grips the back of the product, there is also a limitation here that the front of the product, in the zone where cutting is being performed, can still move sideways.

JP 3 896090 B2 discloses a positioning machine according to the preamble of claim 1.

In JP 3 896090 B2, the links are provided with plate-shaped claw elements in order to engage into meat to be cut for conveyance thereof to a cutting blade. Such a link belt is, however, not very suitable for dynamic applications.

US2021/0179359 A1 describes and depicts a wire conveyor belt for holding products during conveyance through a toaster. However, such a wire conveyor belt is not suitable for holding meat to be cut with a cutting blade.

US 2009/0250324 A1 describes and depicts a modular conveyor belt for conveying products through a pasteurizer or cooler. A conveyor belt is also not suitable for holding meat to be cut with a cutting blade.

EP 0 631 950 A1 describes and depicts a conveyor belt comprising modules with high friction and modules with low friction. An embodiment of a module with high friction is provided with protruding parts which are difficult to clean and therefore are not suitable for conveying meat.

CA 2,135,847 proposes providing a modular conveyor belt with a high friction coefficient by means of an integral modular connection which connects two different plastics materials or rubber materials to each other. Here, too, it is proposed to provide conveying surfaces with protruding parts, protruding parts, which are difficult to clean and therefore are not suitable for conveying meat.

The object of the present invention is therefore to provide an improved solution for stably holding meat, to be cut with a cutting blade, in a positioning machine on a link belt which is also sufficiently cleanable to be able to be used in the food industry, for example in positioning machines.

This object of the present invention is achieved by providing a positioning machine for cutting meat into desired portions, comprising a cutting blade and a feed conveyor belt for feeding the meat to the cutting blade in a conveying direction, wherein this feed conveyor belt is designed as a modular link belt, comprising:
- transverse pins which extend virtually parallel to each other transversely with respect to the conveying direction;
- links, each link comprising:
   ∘ a bearing surface, for placing the meat thereon for conveyance of the meat; and
   ∘ attachment bodies, for attaching a transverse pin therethrough, in order to incorporate the link in the link belt,
wherein said attachment bodies of links that are arranged adj acent to each other as seen in the conveying direction are arranged alternatingly on adjacent sides of these links, wherein a single transverse pin is fastened through these alternatingly arranged links, wherein said links comprise base links which are produced from plastic, and wherein at least some of said links are designed as engagement links which are produced from rustproof steel, wherein each engagement link comprises one or more fixedly arranged engagement spikes which project with respect to the bearing surface of this engagement link in order to engage into the meat for conveyance of the meat.

Said engagement spikes can improve the grip of the link belt on the meat. Due to the fact that the engagement spikes engage into or pierce the meat, the meat remains in a maximally stable position.

Said engagement spikes can project in different directions with respect to the bearing surface. These engagement spikes are preferably transverse to the bearing surface.

The engagement spikes can take many shapes, as long as they are sharp enough to be able to engage into the meat for conveyance of the meat. Said spikes are preferably of substantially conical design. Such a cone shape is a simple shape which is easy to clean and easy to produce.

Said engagement links can be produced in various ways. They are preferably formed by injection moulding.

The engagement links are produced from rustproof steel and more specifically from stainless steel, such that they are designed to be less susceptible to wear. Rustproof steel such as stainless steel is also suitable for use in the food industry.

Each engagement link is preferably designed in one piece in order to optimize the cleanability thereof.

With plastics base links, it is possible for the link belt to be provided with lighter links at places where typically no or less meat arrives on the link belt. At places where no or less meat arrives on the link belt, such base links will be less prone to wear. The entire link belt can thus be of lighter design and the link belt can be optimized for the dynamic application thereof with numerous start/stop movements.

The plastic selected for producing links may, for example, be a polymer-based thermoplastic, such as polypropylene, polyethylene or polyoxymethylene (POM), also known as polyacetal.

Such base links are preferably free from said engagement spikes, such that they can be of even lighter and also less expensive design.

Each engagement link in the link belt is preferably surrounded by said base links.

The link belt, on its lateral sides, is further preferably free from said engagement links. Links which are arranged on these lateral sides are then said base links. The engagement links are then only arranged centrally in the link belt, in a zone where said meat is most frequently placed on the link belt.

Each transverse pin is preferably attached at most through one engagement link. This engagement link may extend over the entire width of the link belt. This engagement link preferably extends only over a central zone of this link belt, in a central zone where said meat is most frequently placed on the link belt. This engagement link is then preferably flanked on both sides by a said base link.

In the case of a said engagement link, one or more of said attachment bodies are preferably provided with one or more of said engagement spikes in order to provide this engagement link with the one or more engagement spikes. The number of engagement spikes per attachment body is still preferably limited to at most three.

The feed conveyor belt is arranged adjacent to or adjoining the cutting blade in the positioning machine, such that the meat is held as stably as possible on the link belt with the aid of the engagement spikes when this meat is being cut into desired portions by means of the cutting blade.

A positioning machine according to the present invention further preferably comprises an upper guide belt, which is arranged above the feed conveyor belt, for guiding the meat to the cutting blade.

The use of such an upper guide belt is also known.

In this case, this upper guide belt is then also arranged adjacent to or adjoining the cutting blade in order to maximally guide the meat towards the cutting blade. In combination with a link belt, the meat is held much more stably than in the prior art.

Furthermore, a positioning machine according to the present invention preferably comprises a rapier, which is arranged above the feed conveyor belt, for engaging with the meat so as to feed the meat to the cutting blade, wherein this rapier is movable in the conveying direction. The meat is held on a side away from the cutting blade by this rapier when the meat is being cut by means of this cutting blade. The use of such a rapier is also known.

In combination with a link belt, the meat is held much more stably than in the prior art.

The present invention will now be explained in more detail by means of the following detailed description of a positioning machine according to the present invention. The sole aim of this description is to give illustrative examples and to indicate further advantages and features of the present invention, and can therefore in no way be interpreted as a limitation of the area of application of the invention or of the patent rights defined in the claims.

Reference numerals are used in this detailed description to refer to the attached drawings, in which:
- Figure 1 shows a positioning machine according to the present invention in perspective;
- Figure 2 shows a part of the positioning machine from Figure 1 at the level of the link belt in more detail in perspective, as seen from that side of the cutting blade to which the link belt is adjacent;
- Figure 3 shows a part of the positioning machine from Figure 1 at the level of the link belt in more detail in perspective, as seen from the side of the link belt towards the cutting blade;
- Figure 4 shows a part of a link belt from the positioning machine from Figure 1 separately in perspective;
- Figure 5 shows a part of the link belt from Figure 4 in more detail in perspective;

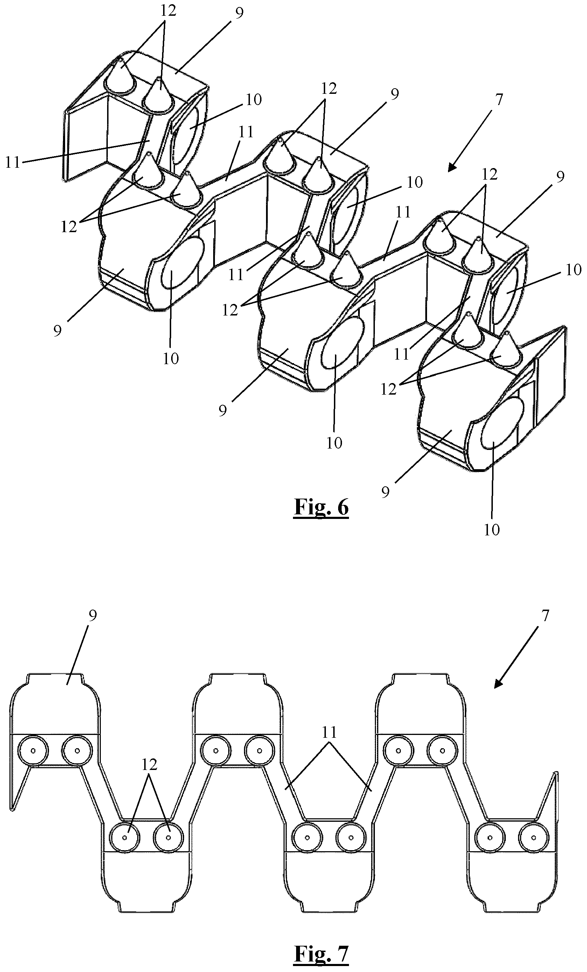

- Figure 6 shows a part of an engagement link from the link belt from Figure 4 separately in perspective;
- Figure 7 shows the part of the engagement link from Figure 6 in top view;

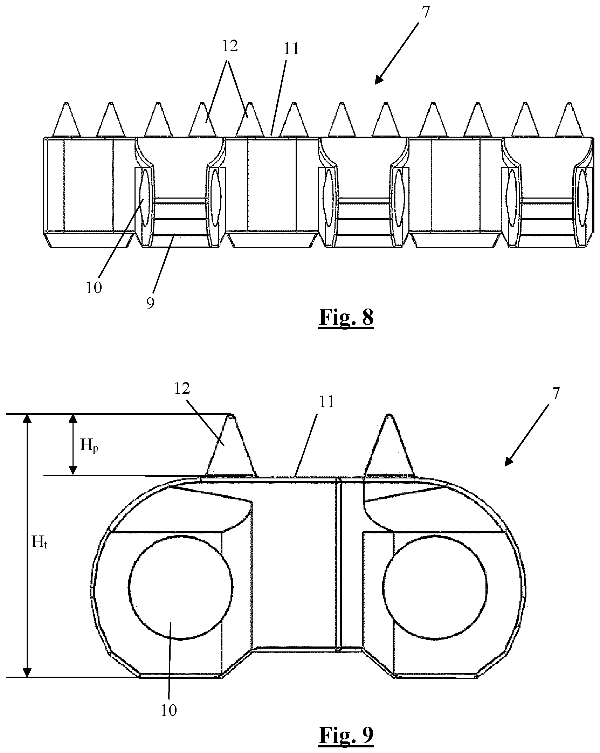

- Figure 8 shows the part of the engagement link from Figure 6 in front view;
- Figure 9 shows the part of the engagement link from Figure 6 in side view.

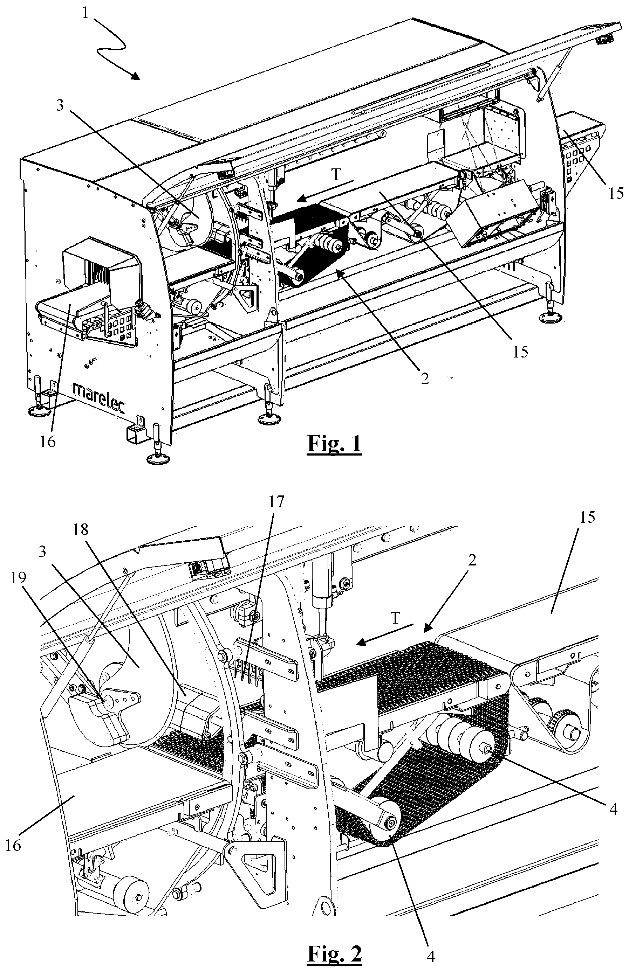

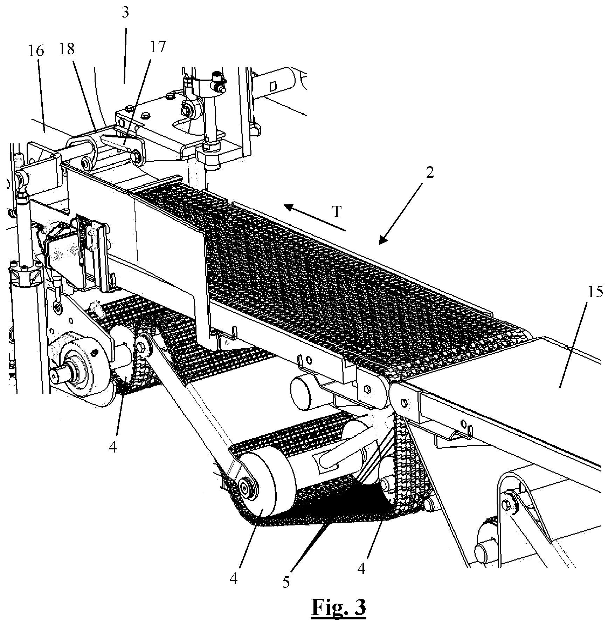

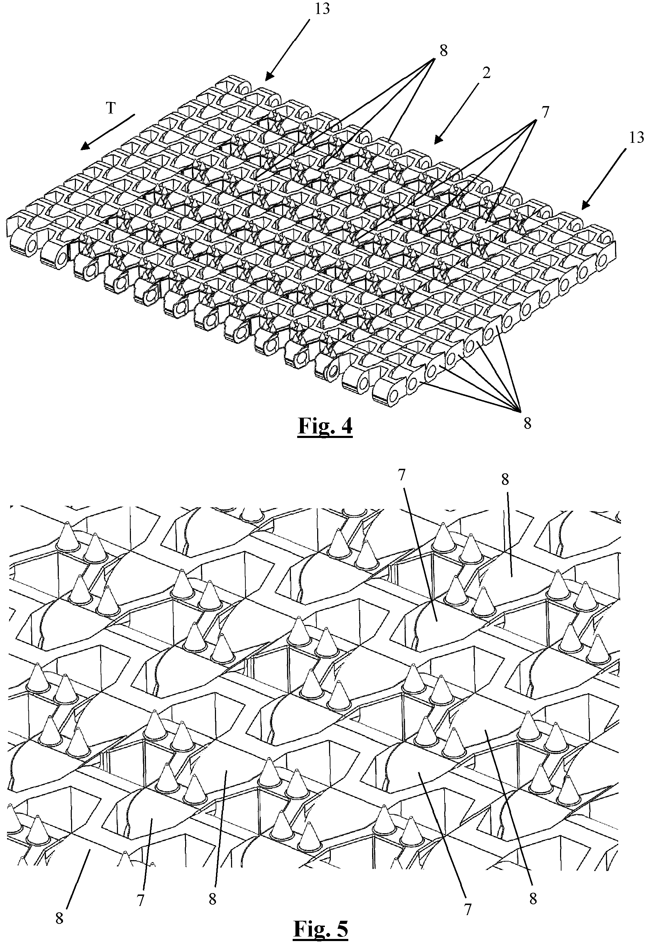

The positioning machine (1) depicted in the figures comprises a cutting blade (3) in order to cut meat into desired portions by means of said blade. It typically (but not exclusively) concerns bone-in meat (cutlet, neck/shoulder), typically slightly frozen on the outside, and/or products which have a hard exterior such as smoked meat. Desired portions are typically portions having approximately an identical thickness or an identical weight. The cutting blade (3) is arranged between a link belt (2) and an outfeed belt (16). The link belt (2) is used to bring meat to be cut to the cutting blade (3), where it is cut into the desired portions by means of the cutting blade (3), after which the meat cut into portions is discharged from the cutting blade (3) by means of the outfeed belt (16). The conveying direction (T) of the meat is indicated by an arrow in Figures 1-4. Additional feed conveyor belts (15) are provided in order to bring the meat to the link belt (2).

The cutting blade (3) is rotatably arranged about its axis of rotation (19). In these figures, this axis of rotation (19) extends in the conveying direction (T) of the meat. When cutting the meat, the cutting blade (3) rotates about its axis of rotation (19) and the cutting blade (3) is brought, in a rotating movement, from a position above the meat to between the link belt (2) and the outfeed belt (16).

The modular link belt (2) comprises transverse pins (5) which extend virtually parallel to each other transversely with respect to the conveying direction (T). In addition, the link belt (2) comprises links (7, 8) which are provided with attachment bodies (9) for attaching such a transverse pin (5) therethrough. Attachment bodies (9) of links (7, 8) that are arranged successively in the conveying direction (T) are attached between each other, such that they can be alternatingly attached to a single transverse pin (5). The links (7, 8) are thus interlinked in order to incorporate them in the link belt (2). The engagement bodies (9) are each provided with passage openings (10) through which a transverse pin (5) can be attached for fastening of the links (7, 8) to this transverse pin (5).

The links (7, 8) connected to the transverse pins (5) thus form an endless conveyor belt, which is attached in a known manner around turning wheels (4). The turning wheels (4) also comprise a drive wheel in order to drive this conveyor belt.

In the embodiment depicted, the link belt (2) comprises base links (8) and engagement links (7). All the links (7, 8) comprise a bearing surface (11), for placing the products thereon for conveyance of these products. The engagement links (7) differ from the base links (8) in that they are provided with engagement spikes (12) which project with respect to the bearing surface (11). These engagement spikes (12) are provided in order to engage into the meat for conveyance thereof, such that this meat remains in a stable enough position during the cutting thereof by means of the cutting blade (3).

In order to be able to engage into the meat, the engagement spikes (12) have to be of sufficiently sharp design for this. In the embodiment depicted, these are of conical design, such that they are easy to produce and also easy to clean. The engagement spikes (12) can project in different directions with respect to the bearing surface (11), but are designed projecting transversely with respect to this bearing surface (11) in the embodiment depicted.

The engagement spikes (12) have to project high enough with respect to the bearing surface (11) to be able to pierce the meat, but also not too high so that they do not form an obstacle for the turning of the link belt (2). In the embodiment depicted, these engagement spikes (12) project over a height Hₚ of approximately 3 mm with respect to the bearing surface (12). The centre distance between two transverse pins (5) is approximately 12.7 mm in this embodiment. The height Hₚ of the engagement spikes (12) is between one quarter and one fifth of the total height Hₜ of the engagement link (7).

The links (7, 8) depicted may, for example, be produced by injection moulding. The base links (8) are preferably produced from a plastic, such as polypropylene, polyethylene or polyoxymethylene (POM), also known as polyacetal. The engagement links (7) are produced from rustproof steel such as stainless steel.

The links (7, 8) are each designed in one piece.

In the embodiment depicted, in each case two engagement spikes (12) per attachment body (9) are provided in order to provide the engagement links (7) with the engagement spikes (12). The engagement links (7) are each surrounded by base links (8), such that the engagement spikes (12) are arranged distributed over a central zone (14) of the link belt (2) and the lateral sides (13) of the link belt (2) are free from engagement spikes (12). Alternative arrangements and distributions of the engagement spikes (12) are possible, but less preferred. For instance, as an alternative not according to the invention, a link belt (2) could for example comprise only engagement links (7) and no base links (8). As an alternative, it is also possible for multiple engagement links (7) to be provided on a single transverse pin (5). The engagement links (7) may also be provided with more or fewer engagement spikes (12) than in the embodiment depicted. With the arrangement and distribution depicted, it is possible to maximally ensure that meat is stably held for cutting thereof by means of the cutting blade (3), whilst a combination of stainless steel engagement links (7) and plastics base links (8) keeps the weight of the link belt (2) as low as possible. By providing only one engagement link (7) per transverse pin (5), the overall strength of the link belt (2) is increased.

In order to hold the meat as stably as possible on the link belt (2) during the cutting, in the embodiment depicted the positioning machine (1) further comprises:
- an upper guide belt (18), which is arranged above the link belt (2), for guiding the meat to the cutting blade (3); and
- a rapier (17), which is arranged above the link belt (2), for engaging with the meat so as to feed the meat to the cutting blade (3). This rapier (17) can engage with the back of the meat and is movable in the conveying direction (T).

Both an upper guide belt (18) of this kind and a rapier (17) of this kind can be realized in many different ways, as known from the prior art.

In the embodiment depicted, the link belt (2) is incorporated in a portioning machine (1) for cutting meat into desired portions. In alternative embodiments not according to the invention, a link belt (2) can also be used in other machines, for conveying other products, typically machines which have to move or position a product with relatively great force.

## Claims

1. Positioning machine (1) for cutting meat into desired portions, comprising a cutting blade (3) and a feed conveyor belt (2) for feeding the meat to the cutting blade (3) in a conveying direction (T), wherein this feed conveyor belt is designed as a modular link belt (2), comprising:
- transverse pins (5) which extend virtually parallel to each other transversely with respect to the conveying direction (T);
- links (7, 8), each link (7, 8) comprising:
i. a bearing surface (11), for placing the meat thereon for conveyance of the meat; and
ii. attachment bodies (9), for attaching a transverse pin (5) therethrough, in order to incorporate the link (7, 8) in the link belt (2),
wherein said attachment bodies (9) of links (7, 8) that are arranged adjacent to each other as seen in the conveying direction (T) are arranged alternatingly on adjacent sides of these links (7, 8) and wherein a single transverse pin (5) is fastened through these alternatingly arranged links (7, 8);
wherein at least some of said links (7, 8) are designed as engagement links (7), wherein each engagement link (7) comprises one or more fixedly arranged engagement spikes (12) which project with respect to the bearing surface (11) of this engagement link (7) in order to engage into the meat for conveyance of the meat;
**characterized in that** said links (7, 8) comprise base links (8) which are produced from plastic, and **in that** the engagement links (7) are produced from rustproof steel.

2. Positioning machine (1) according to Claim 1, **characterized in that** each engagement link (7) is designed in one piece.

3. Positioning machine (1) according to one of the preceding claims, **characterized in that** the base links (8) are free from said engagement spikes (12).

4. Positioning machine (1) according to one of the preceding claims, **characterized in that** each engagement link (7) in the link belt (2) is surrounded by base links (8).

5. Positioning machine (1) according to one of the preceding claims, **characterized in that** the link belt (2), on its lateral sides (13), is free from engagement links (7).

6. Positioning machine (1) according to one of the preceding claims, **characterized in that** each transverse pin (5) is attached at most through one engagement link (7).

7. Positioning machine (1) according to one of the preceding claims, **characterized in that**, in the case of a said engagement link (7), one or more attachment bodies (9) are provided with one or more of said engagement spikes (12) in order to provide this engagement link (7) with the one or more engagement spikes (12).

8. Positioning machine (1) according to one of the preceding claims, **characterized in that** the positioning machine (1) comprises an upper guide belt (18), which is arranged above the feed conveyor belt (2), for guiding the meat to the cutting blade (3).

9. Positioning machine (1) according to one of the preceding claims, **characterized in that** the positioning machine (1) comprises a rapier (17), which is arranged above the feed conveyor belt (2), for engaging with the meat so as to feed the meat to the cutting blade (3), wherein this rapier is movable in the conveying direction (T).

## Patentansprüche

1. Positioniermaschine (1) zum Schneiden von Fleisch in gewünschte Portionen, umfassend ein Schneidmesser (3) und ein Zuführförderband (2) zum Zuführen des Fleisches zum Schneidmesser (3) in einer Förderrichtung (T), wobei dieses Zuführförderband als modulares Gliederband (2) ausgebildet ist und Folgendes umfasst:
- Querbolzen (5), die im Wesentlichen parallel zueinander quer zur Förderrichtung (T) verlaufen;
- Glieder (7, 8), wobei jedes Glied (7, 8) Folgendes umfasst:
i. eine Auflagefläche (11) zum Auflegen des Fleisches für den Transport des Fleisches; und
ii. Befestigungskörper (9) zur Befestigung eines Querbolzens (5) hindurch, um das Glied (7, 8) in das Gliederband (2) einzubringen,
wobei die Befestigungskörper (9) von Gliedern (7, 8), die in Förderrichtung (T) nebeneinander angeordnet sind, wechselseitig an benachbarten Seiten dieser Glieder (7, 8) angeordnet sind, und wobei ein einzelner Querbolzen (5) durch diese wechselseitig angeordneten Glieder (7, 8) befestigt ist;
wobei mindestens einige der Glieder (7, 8) als Eingriffsglieder (7) ausgebildet sind, wobei jedes Eingriffsglied (7) einen oder mehrere fest angeordnete Eingriffsdorne (12) aufweist, die sich über die Auflagefläche (11) dieses Eingriffsglieds (7) hinaus erstrecken, um zum Transport des Fleisches in das Fleisch einzugreifen;
**dadurch gekennzeichnet, dass** die Glieder (7, 8) Basisglieder (8) umfassen, die aus Kunststoff gefertigt sind, und dass die Eingriffsglieder (7) aus rostfreiem Stahl gefertigt sind.

2. Positioniermaschine (1) nach Anspruch 1, **dadurch gekennzeichnet, dass** jedes Eingriffsglied (7) einstückig ausgebildet ist.

3. Positioniermaschine (1) nach einem der vorhergehenden Ansprüche, **dadurch gekennzeichnet, dass** die Basisglieder (8) frei von Eingriffsdornen (12) sind.

4. Positioniermaschine (1) nach einem der vorhergehenden Ansprüche, **dadurch gekennzeichnet, dass** jedes Eingriffsglied (7) im Gliederband (2) von Basisgliedern (8) umgeben ist.

5. Positioniermaschine (1) nach einem der vorhergehenden Ansprüche, **dadurch gekennzeichnet, dass** das Gliederband (2) an seinen seitlichen Rändern (13) frei von Eingriffsgliedern (7) ist.

6. Positioniermaschine (1) nach einem der vorhergehenden Ansprüche, **dadurch gekennzeichnet, dass** jeder Querbolzen (5) maximal durch ein Eingriffsglied (7) geführt ist.

7. Positioniermaschine (1) nach einem der vorhergehenden Ansprüche, **dadurch gekennzeichnet, dass** bei einem Eingriffsglied (7) ein oder mehrere Befestigungskörper (9) mit einem oder mehreren Eingriffsdornen (12) versehen sind, um dieses Eingriffsglied (7) mit einem oder mehreren Eingriffsdornen (12) zu versehen.

8. Positioniermaschine (1) nach einem der vorhergehenden Ansprüche, **dadurch gekennzeichnet, dass** die Positioniermaschine (1) ein oberes Führungsband (18) aufweist, das über dem Zuführförderband (2) angeordnet ist, um das Fleisch zum Schneidmesser (3) zu führen.

9. Positioniermaschine (1) nach einem der vorhergehenden Ansprüche, **dadurch gekennzeichnet, dass** die Positioniermaschine (1) einen Greifer (17) aufweist, der über dem Zuführförderband (2) angeordnet ist, um das Fleisch zu greifen und das Fleisch dem Schneidmesser (3) zuzuführen, wobei dieser Greifer in Förderrichtung (T) beweglich ist.

## Revendications

1. Machine de positionnement (1) pour couper de la viande en portions souhaitées, comprenant une lame de coupe (3) et une bande transporteuse d'alimentation (2) pour alimenter la lame de coupe (3) en viande dans une direction de transport (T), cette bande transporteuse d'alimentation étant conçue comme une bande articulée modulaire (2), comprenant :
- des goupilles transversales (5) qui s'étendent virtuellement parallèlement les unes aux autres transversalement par rapport à la direction de transport (T) ;
- des maillons (7, 8), chaque maillon (7, 8) comprenant :
i. une surface de support (11), pour y placer la viande pour le transport de la viande ; et
ii. des corps d'attache (9), pour attacher une goupille transversale (5) à travers ceux-ci, afin d'incorporer le maillon (7, 8) dans la bande articulée (2),
lesdits corps d'attache (9) de maillons (7, 8) qui sont agencés adjacents les uns aux autres comme vu dans la direction de transport (T), sont agencés en alternance sur des côtés adjacents de ces maillons (7, 8) et une seule goupille transversale (5)étant assujettie à travers ces maillons (7, 8) agencés en alternance ;
au moins certains desdits maillons (7, 8) étant conçus comme des maillons (7) de mise en prise, chaque maillon (7) de mise en prise comprenant une ou plusieurs pointes (12) de mise en prise agencées de manière fixe qui font saillie par rapport à la surface de support (11) de ce maillon (7) de mise en prise afin se mettre en prise dans la viande pour le transport de la viande ;
**caractérisée en ce que** lesdits maillons (7, 8) comprennent des maillons (8) de base qui sont produits à partir de plastique, et **en ce que** les maillons (7) de mise en prise sont produits à partir d'acier antirouille.

2. Machine de positionnement (1) selon la revendication 1, **caractérisée en ce que** chaque maillon (7) de mise en prise est conçu d'un seul tenant.

3. Machine de positionnement (1) selon l'une des revendications précédentes, **caractérisée en ce que** les maillons (8) de base sont exempts desdites pointes (12) de mise en prise.

4. Machine de positionnement (1) selon l'une des revendications précédentes, **caractérisée en ce que** chaque maillon (7) de mise en prise dans la bande articulée (2) est entouré de maillons (8) de base.

5. Machine de positionnement (1) selon l'une des revendications précédentes, **caractérisée en ce que** la bande articulée (2), sur ses côtés latéraux (13), est exempte de maillons (7) de mise en prise.

6. Machine de positionnement (1) selon l'une des revendications précédentes, **caractérisée en ce que** chaque goupille transversale (5) est attachée à travers au plus un maillon (7) de mise en prise.

7. Machine de positionnement (1) selon l'une des revendications précédentes, **caractérisée en ce que**, dans le cas d'un dit maillon (7) de mise en prise, un ou plusieurs corps d'attache (9) sont pourvus d'une ou de plusieurs desdites pointes (12) de mise en prise de façon à pourvoir ce maillon (7) de mise en prise des une ou plusieurs pointes (12) de mise en prise.

8. Machine de positionnement (1) selon l'une des revendications précédentes, **caractérisée en ce que** la machine de positionnement (1) comprend une bande de guidage supérieure (18), qui est agencée au-dessus de la bande transporteuse d'alimentation (2), pour guider la viande vers la lame de coupe (3).

9. Machine de positionnement (1) selon l'une des revendications précédentes, **caractérisée en ce que** la machine de positionnement (1) comprend une lance (17), qui est agencée au-dessus de la bande transporteuse d'alimentation (2), pour se mettre en prise avec la viande de façon à introduire la viande dans la lame de coupe (3), cette lance étant mobile dans la direction de transport (T).
